# FASCICULE DE BREVET EUROPEEN

(11) **EP 4 242 855 B1**
(45) Date de publication et mention de la délivrance du brevet: **05.06.2024**
(21) Numéro de dépôt: 23159428.4
(22) Date de dépôt: 01.03.2023
(51) Int. Cl.: G06F 12/02, G06F 17/15, G06N 3/063, G06F 9/38, G06N 3/04, G06F 9/30, G06F 12/06

(54) **GÉNÉRATEUR D'ADRESSES POUR UN CALCULATEUR À ARCHITECTURE DE TYPE " INSTRUCTION UNIQUE, DONNÉES MULTIPLES**
ADRESSENGENERATOR FÜR EINEN RECHNER MIT EINZELBEFEHL-MEHRDATENARCHITEKTUR
ADDRESS GENERATOR FOR A COMPUTER HAVING A SINGLE INSTRUCTION MULTIPLE DATA ARCHITECTURE

(30) Priorité: 11.03.2022 FR 2202150
(43) Date de publication de la demande: 13.09.2023
(73) Titulaire: COMMISSARIAT À L'ÉNERGIE ATOMIQUE ET AUX ÉNERGIES ALTERNATIVES, 75015 Paris (FR)
(72) Inventeur: MILLET, Raphaël, 91191 GIF-SUR-YVETTE CEDEX (FR); TAIN, Benoit, 91191 GIF-SUR-YVETTE CEDEX (FR)
(74) Mandataire: Atout PI Laplace

(56) Documents cités:
- EP-A1- 3 330 900
- EP-A2- 0 232 641
- EP-A2- 3 396 533
- FR-A1- 2 984 556
- US-A- 5 327 541
- US-A1- 2014 189 308
- US-A1- 2020 356 367

## Description

L'invention concerne le domaine des systèmes de calcul qui intègrent des accélérateurs de type « instruction unique, données multiples » ou SIMD « Single Instruction Multiple Data » en anglais et porte plus précisément sur un générateur d'adresses pour un tel calculateur, permettant d'optimiser le ratio de nombres d'opérations par cycle de calcul en proposant un calcul d'adresse en un cycle.

Les systèmes basés sur des architectures de type SIMD permettent de réaliser de multiples applications qui nécessitent un grand nombre d'opérations sur une quantité importante de données. Un exemple d'application concerne l'intelligence artificielle et en particulier les réseaux de neurones convolutionnels qui nécessitent l'exécution d'un très grand nombre d'opérations MAC (multiplication puis accumulation) pour réaliser des calculs de convolution sur des ensembles de données multidimensionnels.

Appliqué aux systèmes embarqués, les accélérateurs SIMD se doivent d'être performants malgré des ressources limitées et une faible consommation d'énergie qui doit rester compatible avec des équipements sur batterie. Un des grands défis concerne les mouvements de données dans l'architecture. Afin de satisfaire les contraintes de performances et de consommation, la réutilisation des données doit être privilégiée et il est nécessaire d'implémenter des mécanismes permettant de limiter les déplacements ou la manipulation des données au cours des traitements.

Un défi à résoudre pour de tels systèmes consiste à alimenter en données les unités de calculs (encore appelés processeurs élémentaires ou PE) qui réalisent des calculs en parallèle. Une manipulation astucieuse des données est souvent nécessaire afin de présenter à chaque cycle la bonne donnée à la bonne unité de calcul. Pour cela, certaines architectures permettent un couplage entre chaque processeur élémentaire et une mémoire locale. Des accès voisins sont permis, autrement dit chaque processeur élémentaire peut accéder à plusieurs mémoires locales et chaque mémoire locale est partagée entre plusieurs processeurs élémentaires. Dans ce type d'architecture, il existe un besoin pour un générateur d'adresse commun en charge de calculer l'adresse à utiliser simultanément pour chacun des processeurs élémentaires afin d'accéder à la bonne donnée. Afin de réaliser des calculs parallèles à partir d'une seule instruction (principe SIMD), c'est la même séquence d'accès aux données qui est utilisée par chaque processeur élémentaire pour accéder à sa mémoire locale et/ou aux mémoires locales voisines via la même adresse.

Un problème à résoudre dans ce contexte consiste à générer la bonne adresse à chaque cycle afin d'accéder à la donnée nécessaire au calcul et ce sans introduire de cycles supplémentaires pour le calcul des adresses.

La plupart des processeurs de traitement de signal ou des systèmes SIMD intègrent un ou plusieurs générateurs d'adresse encore appelés « data address generator » DAG en anglais. Ces générateurs d'adresses opèrent en parallèle des unités de calcul permettant ainsi une augmentation des performances du système. Les générateurs d'adresses implémentent des fonctionnalités telles que le balayage d'un espace d'adresse contigu.

Des exemples de générateurs d'adresses pour différents types d'architectures de calcul parallèle sont présentés dans la publication d'Analog Devices, « ADSP-21160 SHARC DSP Hardware Reference, Data Address Generators » ou dans les brevets ou demandes de brevets US6647484, US9203671, US2014/0115302, US9529747, US6049858, US7064987, US5778416, US6526430.

Document EP0232641 A2 divulgue un générateur d'instructions pour calculateur de type SIMD et un circuit logique permettant de détecter d'éventuels conflits d'adresse vectorielle.

Un inconvénient général des solutions de l'état de l'art est qu'elles nécessitent le plus souvent de réaliser des opérations supplémentaires pour que chaque processeur élémentaire puisse accéder à la bonne donnée. De façon générale, aucune solution connue ne permet un accès correct aux données en un cycle, c'est-à-dire sans introduire d'opérations supplémentaires.

La présente invention vise à résoudre les limitations des solutions de l'art antérieur en proposant un générateur d'adresses pour calculateur à architecture SIMD permettant de calculer une adresse commune pour chaque processeur élémentaire sans introduire d'opérations supplémentaires et donc sans nécessiter de consommer des cycles de calcul supplémentaires.

Ainsi, l'invention permet d'optimiser le taux d'opérations de base par cycle réalisées par le calculateur pour se rapprocher d'un taux d'utilisation de 100%. De cette manière, la consommation d'énergie du calculateur est réduite par rapport aux solutions de l'art antérieur.

L'invention s'applique avantageusement pour des calculateurs implémentant des réseaux de neurones convolutionnels qui nécessitent un grand nombre d'opérations élémentaires et d'accès mémoire.

L'invention a pour objet un générateur d'adresse pour un calculateur à architecture de type « instruction unique, données multiples » comprenant plusieurs processeurs élémentaires étant chacun associé à une mémoire locale, chaque processeur élémentaire ayant un accès à sa mémoire locale et au moins un accès à une mémoire locale voisine d'un autre processeur élémentaire, le générateur d'adresse étant configuré pour, en réponse à une instruction de calcul, déterminer une adresse d'accès mémoire identique pour tous les processeurs élémentaires, le générateur d'adresse comprenant :
- Une première unité de calcul d'une première valeur de décalage d'accès selon une première dimension d'adressage, et
- Un additionneur pour calculer l'adresse d'accès mémoire comme la somme de la première valeur de décalage d'accès et d'une valeur de décalage initiale prédéterminée dépendant d'un type d'accès mémoire indiqué par l'instruction de calcul parmi un accès mémoire à la mémoire locale ou un accès mémoire à l'une quelconque des mémoires locales voisines.

Selon un aspect particulier de l'invention, la première unité de calcul est configurée pour, en réponse à une demande d'accès mémoire par l'instruction de calcul,
- incrémenter la première valeur de décalage d'accès d'une première valeur d'incrément,
- comparer le type d'accès mémoire demandé par rapport au type d'accès mémoire précédent, et
- réinitialiser la première valeur de décalage d'accès lorsque le nombre d'accès mémoire atteint une première valeur maximale ou lorsque le type d'accès mémoire demandé est différent du type d'accès mémoire précédent.

Selon un aspect particulier de l'invention, la première unité de calcul comprend un comparateur pour comparer le type d'accès mémoire demandé par rapport au type d'accès mémoire précédent, un registre et un additionneur pour incrémenter et sauvegarder la première valeur de décalage d'accès et un compteur pour compter le nombre d'accès mémoire.

Selon un aspect particulier de l'invention, le compteur est configuré pour réinitialiser le registre lorsque le nombre d'accès mémoire atteint la première valeur maximale.

Selon un aspect particulier de l'invention, le comparateur est configuré pour réinitialiser le registre lorsque le type d'accès mémoire demandé est différent du type d'accès mémoire précédent.

Selon un aspect particulier de l'invention, l'accès aux mémoires est multidimensionnel et le générateur d'adresses comprend en outre au moins une unité de calcul supplémentaire pour calculer une valeur de décalage d'accès supplémentaire selon une dimension d'adressage supplémentaire, l'additionneur étant configuré pour calculer l'adresse d'accès mémoire comme la somme de toutes les valeurs de décalage d'accès selon chaque dimension d'adressage et de ladite valeur de décalage initiale.

Selon un aspect particulier de l'invention, chaque unité de calcul supplémentaire est configurée pour :
- Incrémenter un compteur du nombre d'accès mémoire selon la dimension d'adressage supplémentaire,
- Incrémenter la valeur de décalage d'accès supplémentaire d'une deuxième valeur d'incrément à chaque nouvel accès mémoire selon la dimension d'adressage supplémentaire, et
- Réinitialiser la valeur de décalage d'accès supplémentaire lorsque le nombre d'accès mémoire selon la dimension d'adressage supplémentaire atteint une seconde valeur maximale.

Selon un aspect particulier de l'invention, chaque unité de calcul supplémentaire comprend un registre et un additionneur pour incrémenter et sauvegarder la valeur de décalage d'accès supplémentaire et un compteur pour compter le nombre d'accès mémoire selon la dimension d'adressage supplémentaire.

Selon un aspect particulier de l'invention, le compteur est configuré pour réinitialiser le registre lorsque le nombre d'accès mémoire selon la dimension d'adressage supplémentaire atteint la seconde valeur maximale.

L'invention a aussi pour objet un calculateur à architecture de type « instruction unique, données multiples » comprenant :
- Un processeur hôte,
- Une mémoire d'instructions,
- Une unité de contrôle comprenant un générateur d'adresse selon l'invention,
- Plusieurs processeurs élémentaires étant chacun associé à une mémoire locale, chaque processeur élémentaire ayant un accès à sa mémoire locale et au moins un accès à une mémoire locale voisine d'un autre processeur élémentaire.

Selon un aspect particulier de l'invention, le calculateur est configuré pour réaliser des calculs de convolution entre un filtre de convolution et des données multidimensionnelles stockées dans les mémoires locales avec un niveau d'entrelacement prédéfini, la première dimension d'adressage correspondant à une première dimension du filtre de convolution, la deuxième dimension d'adressage correspondant à une seconde dimension du filtre de convolution et les dimensions d'adressage supplémentaires correspondant aux dimensions supplémentaires des données multidimensionnelles.

Selon un aspect particulier de l'invention, les valeurs d'incrément sont définies par le plan d'occupation des données en mémoire, la première valeur maximale est égale à la taille du filtre de convolution selon sa première dimension, la valeur maximale selon la deuxième dimension d'adressage est égale à la taille du filtre de convolution selon sa seconde dimension et les valeurs maximales selon les dimensions d'adressage supplémentaires sont respectivement égales aux tailles maximales des données selon les dimensions supplémentaires des données.

D'autres caractéristiques et avantages de la présente invention apparaîtront mieux à la lecture de la description qui suit en relation aux dessins annexés suivants.
[Fig. 1] représente un schéma d'un calculateur SIMD avec des accès mémoires voisins droite et gauche pour chaque processeur élémentaire,
[Fig.2a] illustre une opération de convolution réalisée par le calculateur de la figure 1 à partir d'un filtre de convolution appliqué à une matrice de données,
[Fig. 2b] illustre un exemple de placement mémoire des données de la figure 2a dans les mémoires locales du calculateur de la figure 1,
[Fig. 2c] illustre un exemple d'accès mémoire nécessaire pour réaliser une première passe de convolution,
[Fig. 2d] illustre un exemple d'accès mémoire nécessaire pour réaliser une seconde passe de convolution,
[Fig. 3] représente un schéma d'un générateur d'adresses selon l'invention,
[Fig. 4] représente un schéma d'un générateur d'adresses selon un premier mode de réalisation particulier de l'invention applicable à des calculs sur des données tridimensionnelles,
[Fig. 5] représente un exemple de placement mémoire des données pour une matrice tridimensionnelle de données 8x8x2.
[Fig. 6] représente un exemple de séquence d'accès aux données pour réaliser une passe de convolution,
[Fig. 7] représente un exemple de calcul d'adresses réalisé par le générateur d'adresses de la figure 4 pour la séquence d'accès aux données de la figure 6,
[Fig. 8] représente un schéma d'un générateur d'adresses selon un second mode de réalisation particulier de l'invention applicable à des calculs sur des données à quatre dimensions,
[Fig. 9] représente un schéma d'un calculateur SIMD comprenant un générateur d'adresses selon l'invention.

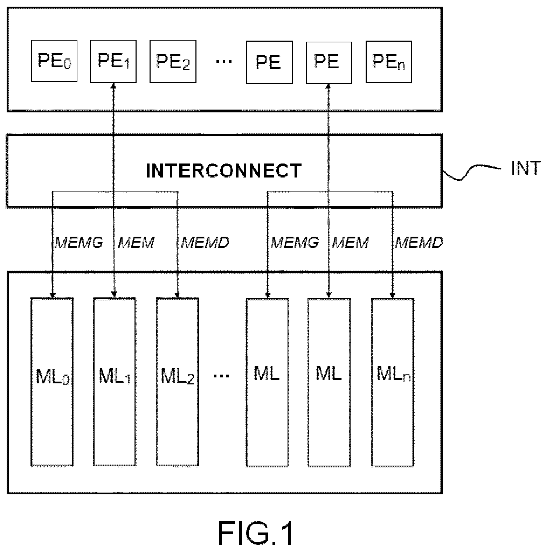

La figure 1 représente un schéma général d'un calculateur SIMD comprenant plusieurs unités de calcul ou processeurs élémentaires PE₁, PEₙ et autant de mémoires locales ML₁, MLₙ. Chaque processeur élémentaire a un accès à une mémoire locale de même index MEM et aux mémoires locales voisines gauches MEMG et droites MEMD. Ainsi, par exemple, le processeur élémentaire PE₂ a accès aux mémoires locales ML₁, ML₂ et ML₃. Le couplage entre les processeurs élémentaires et les mémoires locales est réalisé au moyen d'un dispositif d'interconnexion INT.

L'invention concerne un générateur d'adresses pour déterminer, pour chaque instruction, une adresse commune pour tous les processeurs élémentaires permettant d'accéder à une donnée dans l'une des trois mémoires auxquelles il a accès et ce afin de réaliser le calcul induit par l'instruction. Sans perte de généralités le nombre de mémoires auquel peut avoir accès un processeur élémentaire peut être supérieur à 3, par exemple plusieurs mémoires voisines gauches et plusieurs mémoires voisines droites.

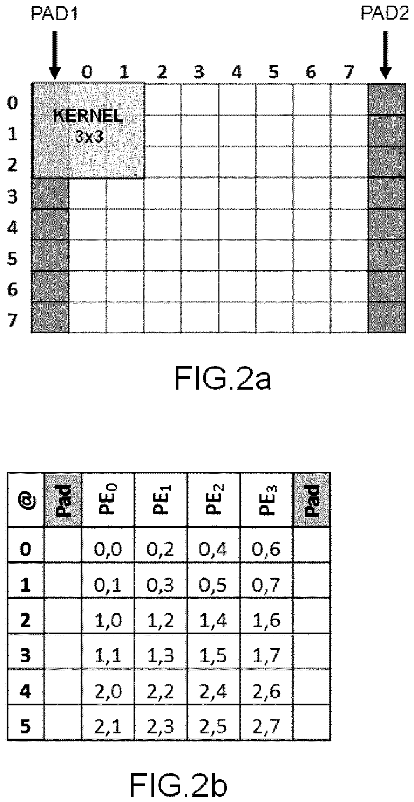

Les figures 2a à 2d illustrent une séquence d'accès mémoire pour réaliser un calcul de convolution sur des données matricielles (deux dimensions) au moyen d'un générateur d'adresses selon l'art antérieur.

La figure 2a représente une matrice de données de dimensions 8 par 8 sur laquelle est appliqué un filtre de convolution (kernel) de dimension 3 par 3. Une colonne de données nulles PAD1, PAD2 ou « padding » en anglais est ajoutée avant la première colonne 0 et après la dernière colonne 7 de données afin de générer un résultat de même largeur (égale à 8) à la sortie de l'opération de filtrage.

Dans l'exemple choisi, le calculateur comporte quatre processeurs élémentaires PE0, PE1, PE2, PE3 fonctionnant en parallèle.

Les données traitées étant de dimension 8 par 8, un entrelacement de profondeur égale à 2 est réalisé pour le placement des données de la figure 2a dans les mémoires représentées à la figure 2b. La figure 2b représente l'ensemble des mémoires locales (au nombre de quatre) correspondant aux quatre processeurs élémentaires. Dans chaque case mémoire, la donnée sauvegardée est représentée par ses coordonnées (x,y) dans l'image de la figure 2a. Dans l'exemple, chaque mémoire locale est représentée avec une profondeur égale à 6 et une adresse variant donc de 0 à 5. La figure 2b n'est présentée qu'à titre illustratif afin de décrire le calcul de deux lignes de convolution. Pour réaliser un calcul de convolution complet sur une matrice de données de dimension 8x8 et un entrelacement de profondeur égale à 2, la profondeur de chaque mémoire locale doit être égale à 16. Sur la figure 2b, on a aussi représenté deux espaces mémoires « virtuels » Pad correspondant à des données nulles. L'entrelacement de profondeur égale à 2 signifie que chaque mémoire locale stocke deux pixels consécutifs d'une même ligne de la matrice de donnée dans une colonne de mémoire locale. La valeur d'entrelacement peut être supérieure à 2, elle dépend notamment de la dimension des données et du nombre de processeurs élémentaires.

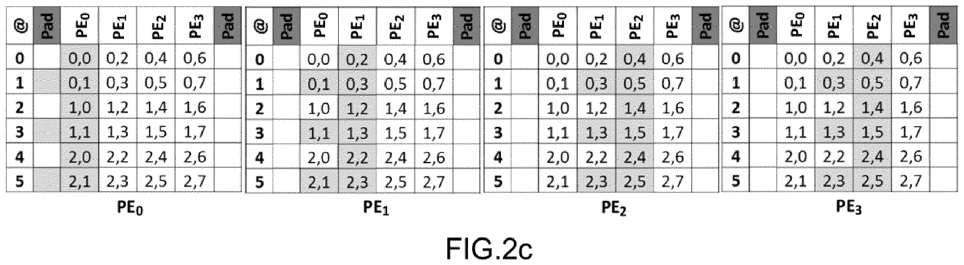

Grâce à ce placement mémoire et au fait que chaque processeur élémentaire a un accès direct à sa colonne mémoire et à celle de ses voisins de gauche et de droite, les processeurs peuvent réaliser en parallèle les calculs suivants illustrés par la figure 2c :
- Le processeur PE0 peut réaliser un calcul de convolution sur les pixels (PAD) ;(0,0) (0,1) ;(PAD) ;(1,0) (1,1) ;(PAD) ;(2,0) ;(2,1), où PAD désigne une donnée nulle de la colonne virtuelle située avant la première colonne mémoire,
- Le processeur PE1 peut réaliser une convolution sur les pixels (0,1) ;(0,2) ;(0,3) ;(1,1) ;(1,2) ;(1,3) ;(2,1) ;(2,2) ;(2,3),
- Le processeur PE2 peut réaliser une convolution sur les pixels (0,3) ;(0,4) ;(0,5) ;(1,3) ;(1,4) ;(1,5) ;(2,3) ;(2,4) ;(2,5), et
- Le processeur PE3 peut réaliser une convolution sur les pixels (0,5) ;(0,6) ;(0,7) ;(1,5) ;(1,6) ;(1,7) ;(2,5) ;(2,6) ;(2,7).

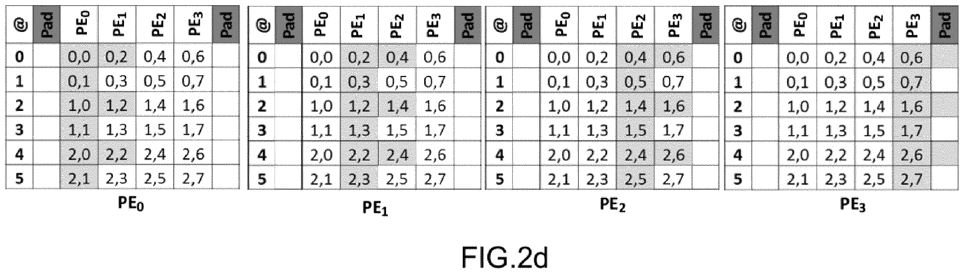

Pour traiter toute l'image, une seconde passe de convolution est réalisée tel qu'illustré à la figure 2d au cours de laquelle :
- Le processeur PE0 peut réaliser une convolution sur les pixels (0,0) ;(0,1) ;(0,2) ;(1,0) ;(1,1) ;(1,2) ;(2,0) ;(2,1) ;(2,2),
- Le processeur PE1 peut réaliser une convolution sur les pixels (0,2) ;(0,3) ;(0,4) ;(1,2) ;(1,3) ;(1,4) ;(2,2) ;(2,3) ;(2,4),
- Le processeur PE2 peut réaliser une convolution sur les pixels (0,4) ;(0,5) ;(0,6) ;(1,4) ;(1,5) ;(1,6) ;(2,4) ;(2,5) ;(2,6), et
- Le processeur PE3 peut réaliser une convolution sur les pixels (0,6) ;(0,7) ;(PAD) ;(1,6) ;(1,7) ;(PAD) ;(2,6) ;(2,7) ;(PAD) où PAD désigne une donnée nulle de la colonne virtuelle située après la dernière colonne mémoire.

En réalisant ces deux passes de convolution, les huit convolutions de la première ligne de la matrice de données sont calculées. Il est ensuite nécessaire d'itérer ces traitements pour toutes les lignes de l'image soit 8 fois pour l'exemple donné à la figure 2a afin de réaliser un calcul de convolution complet sur toute l'image.

Pour pouvoir réaliser les deux passes de convolution décrites précédemment avec les bons accès mémoires en utilisant un générateur d'adresses selon l'art antérieur de la famille des composants ADSP-21xx, il est nécessaire d'exécuter la suite d'instructions suivantes :

Première passe de convolution :
- *SetAddrOffset(1)*
- *MAC(Coef,MemL)*
- *SetAddrOffset(0)*
- *MAC(Coef,Mem) @++*
- *MAC(Coef,Mem) @++*
- *SetAddrOffset(3)*
- *MAC(Coef,MemL)*
- *SetAddrOffset(2)*
- *MAC(Coef,Mem) @++*
- *MAC(Coef,Mem) @++*
- *SetAddrOffset(3)*
- *MAC(Coef,MemL)*
- *SetAddrOffset(2)*
- *MAC(Coef,Mem) @++*
- *MAC(Coef,Mem) @++*

Seconde passe de convolution :
- *Se tA ddrOffse t(0)*
- *MAC(Coef,Mem) @++*
- *MAC(Coef,Mem) @++*
- *SetAddrOffset(0)*
- *MAC(Coef,MemR)*
- *SetAddrOffset(2)*
- *MAC(Coef,Mem) @++*
- *MAC(Coef,Mem) @++*
- *SetAddrOffset(2)*
- *MAC(Coef,MemR)*
- *SetAddrOffset(4)*
- *MAC(Coef,Mem) @++*
- *MAC(Coef,Mem) @++*
- *SetAddrOffset(4)*
- *MAC(Coef,MemR)*

L'instruction *SetAddrOffset()* permet de positionner l'adresse de base du générateur d'adresse.

L'instruction MAC() permet de réaliser une opération de multiplication suivie d'une accumulation. Cette instruction prend deux paramètres en entrée qui correspondent à un coefficient du filtre de convolution et à une donnée (un pixel de l'image par exemple). MemL signifie que la donnée appartient à la mémoire locale du processeur élémentaire voisin gauche. Mem signifie que la donnée appartient à la mémoire locale courante et MemR signifie que la donnée appartient à la mémoire locale du processeur élémentaire voisin droite.

Dans la séquence d'instructions indiquée ci-dessus, après le premier positionnement de l'adresse de base, il est nécessaire de mettre à jour cette adresse de base 5 fois au moyen des instructions *SetAddrOffset().*

Ainsi, en ajoutant les 9 instructions MAC nécessaires au calcul, il faut un total de 15 cycles pour réaliser la convolution. Les 5 mises à jour de l'adresse de base supplémentaires augmentent le nombre de cycles de près de 50%.

Un objectif de l'invention est d'éliminer les cycles supplémentaires nécessaires au repositionnement de l'adresse de base lors des accès mémoires nécessaires aux calculs.

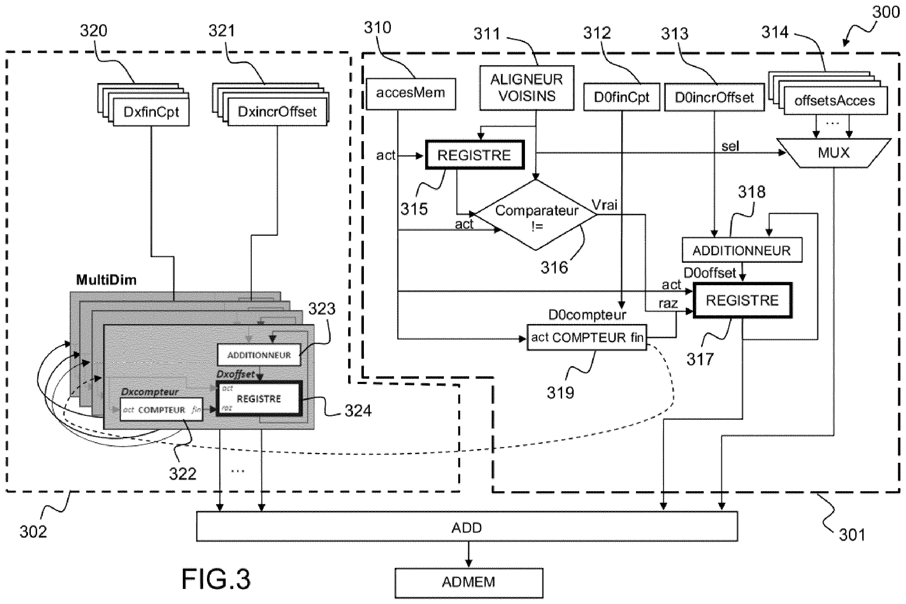

La figure 3 représente un schéma générique d'un générateur d'adresses 300 selon l'invention. Le générateur d'adresses est configuré pour déterminer une adresse mémoire ADMEM en sommant, au moyen d'un additionneur ADD, plusieurs offset ou décalage d'accès. Le générateur d'adresses 300 comporte une première partie 301 dédiée à la génération d'offset sur une première dimension d'adressage et une seconde partie 302 dédiée à la génération d'offsets sur une ou plusieurs dimensions d'adressage supplémentaires.

Le nombre de dimensions d'adressage dépend du nombre de dimensions des données à traiter. Par exemple, si les données d'entrée sont des données vectorielles, c'est-à-dire à une seule dimension, le générateur d'adresses 300 est réduit à sa première partie 301. Si les données d'entrée sont multidimensionnelles à N dimensions, le générateur d'adresses 300 comporte les deux parties 301,302, la seconde partie 302 étant configurée pour générer N-1 offsets correspondant aux N-1 dimensions supplémentaires des données.

La première partie 301 du générateur 300 reçoit en entrée un signal d'accès mémoire 310 généré à chaque nouvelle instruction de calcul pour indiquer au générateur d'adresse la nécessité d'accéder à une donnée en mémoire locale. Il reçoit également une information sur le type d'accès mémoire 311 à savoir si il s'agit d'un accès à la mémoire dite « centrale » associée directement à un processeur élémentaire ou si il s'agit d'un accès à une mémoire voisine par exemple une mémoire située à droite ou à gauche de la mémoire centrale.

L'unité de calcul 301 prend également comme paramètres d'entrées :
- Une valeur 312 de taille de la première dimension d'adressage, qui est égale, dans l'exemple d'un calcul de convolution à la première dimension du filtre de convolution,
- Une valeur 313 d'incrément correspondant à un incrément d'accès selon la première dimension d'adressage. Dans le cas le plus fréquent, cet incrément est égal à 1 mais il peut prendre d'autres valeurs entières non nulles selon le plan mémoire utilisé, et
- Un ensemble d'offsets 314 pour chacune des mémoires auxquelles a accès un processeur élémentaire. La valeur de ces offsets dépend du plan mémoire comme cela sera explicité sur un exemple par la suite.

L'unité de calcul 301 comporte un premier registre 315 et un comparateur 316 agencés pour comparer le type d'accès mémoire fourni par l'indicateur 311 à un instant donné au type d'accès précédent.

L'unité de calcul 301 comporte également un second registre 317 et un additionneur 318 pour incrémenter une valeur d'accès mémoire selon la première dimension d'adressage à chaque nouvel accès mémoire demandé 310.

Si les deux types d'accès sont différents, le comparateur 316 réinitialise le registre 317. Le registre 317 est aussi réinitialisé par un compteur 319 qui compte le nombre d'accès mémoire à partir de l'indicateur 310 jusqu'à la valeur maximale 312.

La valeur d'accès stockée dans le registre 317 est fournie à l'additionneur ADD avec l'une des valeurs d'offset de l'ensemble 314 selon le type d'accès mémoire 311. Un multiplexeur MUX est par exemple utilisé pour sélectionner la bonne valeur d'offset.

Le signal d'accès mémoire 310 déclenche quatre évènements : la comparaison du type d'accès 311 par rapport à l'accès précédent, l'incrément du compteur d'accès 319 selon la première dimension d'adressage, la sauvegarde du type d'accès 311 dans le registre 315 et la mise à jour du second registre 317 avec l'accumulation de l'incrément 313.

La seconde partie 302 du générateur d'adresses comporte autant d'unités de calcul que de dimension d'adressage supplémentaire. Chaque unité de calcul reçoit en entrée une valeur 320 de taille de dimension d'adressage et une valeur 321 d'incrément correspondant à un incrément d'accès selon cette dimension d'adressage.

Chaque unité de calcul comporte un compteur 322 du nombre d'accès selon la dimension d'adressage jusqu'à la valeur maximale 320, un additionneur 323 et un registre 324 pour incrémenter une valeur d'accès mémoire selon la dimension d'adressage considérée. Chaque unité de calcul fourni à l'additionneur ADD une valeur d'accès selon une dimension d'adressage.

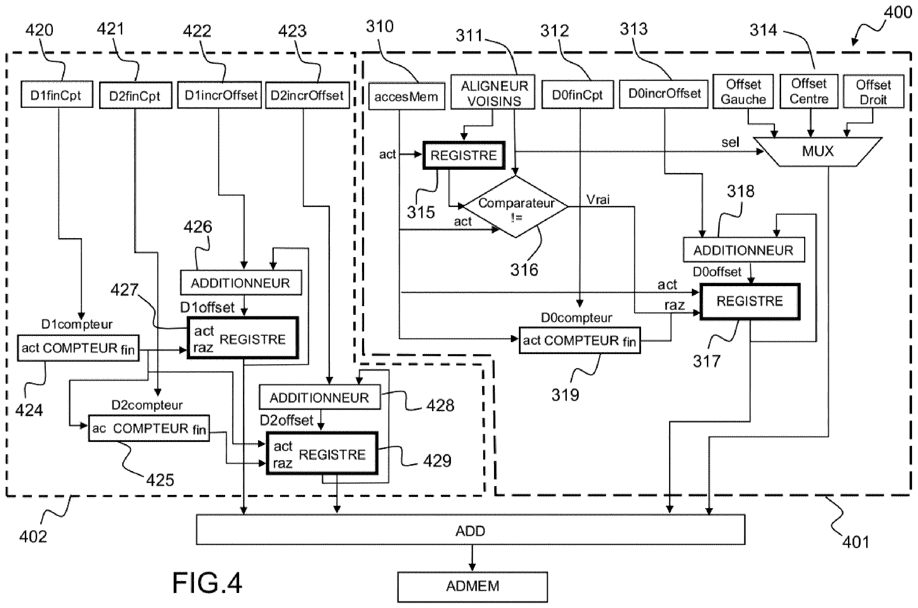

La figure 4 représente un exemple d'un générateur d'adresses 400 selon un mode de réalisation particulier de l'invention applicable à des données tridimensionnelles. Dans cet exemple, les accès mémoires correspondent à des calculs de convolutions entre un filtre de dimension D0xD1 et des données organisées sous la forme d'un nombre D2 de canaux, chaque canal comprenant une matrice 2D de données. Les éléments identiques entre la figure 3 et 4 comportent les mêmes références. Les différences essentielles entre le schéma de la figure 3 et celui de la figure 4 sont :
- L'ensemble d'offsets 314 comporte trois valeurs pour des accès respectifs aux mémoires gauche, centrale et droite,
- La partie 402 du générateur d'adresses comporte deux unités de calcul dédiées respectivement aux deux dernières dimensions (dimension D1 du filtre de convolution et dimension D2 correspondant au nombre de canaux).

Le fonctionnement du générateur d'adresses 400 est détaillé sur un exemple de calcul de convolution entre un filtre de convolution de dimension 3x3 et un ensemble de données à trois dimensions correspondant à deux canaux d'images de tailles 8x8 pixels (même exemple qu'à la figure 2a mais avec deux canaux au lieu d'un seul).

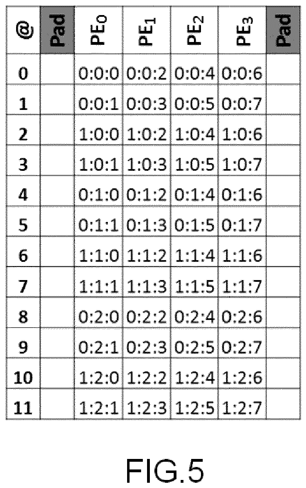

La figure 5 schématise un exemple de placement mémoire pour un dispositif de calcul comprenant quatre processeurs élémentaires PE0,PE1,PE2,PE3 associés à quatre mémoires locales et avec une profondeur d'entrelacement égale à deux afin de traiter les matrices de dimension 8x8.

Deux colonnes de mémoires « virtuelles » contenant des valeurs nulles sont placées à gauche de la mémoire locale du premier processeur élémentaire PE0 et à droite de la mémoire locale du dernier processeur élémentaire PE3.

La première colonne @ du tableau de la figure 5 donne l'adresse de la case mémoire. Les données dans chaque case mémoire sont identifiées par leurs coordonnées tridimensionnelles z.y.x, avec z la coordonnée selon les canaux, variant entre 0 et 1, y la coordonnée selon les lignes de la matrice variant entre 0 et 7 et x la coordonnée selon les colonnes de la matrice variant entre 0 et 7.

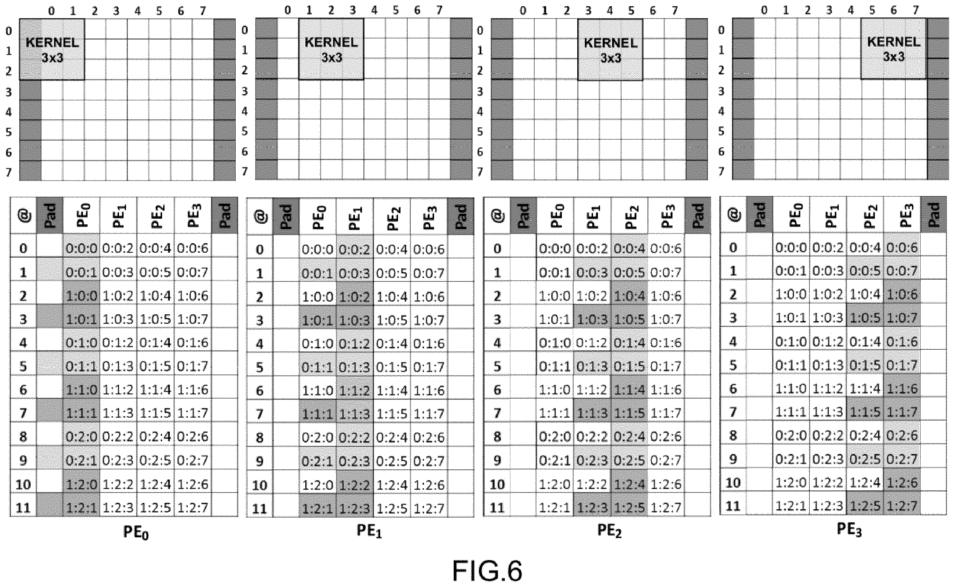

La figure 6 schématise les accès mémoire réalisés par chaque processeur élémentaire pour réaliser une passe de convolution sur la première ligne 0 de la matrice. Pour chaque processeur élémentaire, la figure 6 schématise le placement du filtre de convolution sur la matrice de données. Les adresses mémoires 0,1,4,5,8,9 correspondent aux pixels du premier canal tandis que les adresses mémoires 2,3,6,7,10,11 correspondent aux pixels du second canal.

Chaque processeur élémentaire calcule deux noyaux de convolution (sur les deux canaux) différents en parallèle. La même séquence d'accès aux données permet à chaque processeur élémentaire d'accéder aux données correspondant au noyau de convolution dont il a en charge le calcul.

Comme explicité précédemment, un générateur d'adresses selon l'art antérieur qui ne permet que le balayage d'une zone mémoire contiguë est forcé de repositionner son adresse de base régulièrement en fonction du type d'accès (direct ou voisin), du canal ou de la ligne à accéder. Ces repositionnements nécessitent des cycles de calcul supplémentaires.

Au contraire, le générateur d'adresses selon l'invention permet le calcul de chaque adresse en un seul cycle en utilisant des boucles d'offset multi-dimension et une détection du changement de type d'accès avec une gestion de l'adresse spécifique.

Dans l'exemple de la figure 4, les valeurs des offsets 314 d'accès sont 1 pour la mémoire gauche et 0 pour les mémoires centrale et droite. La valeur d'offset de 1 correspond au fait que le nombre de pixels de padding est égal à 1 alors que l'entrelacement a une profondeur égale à 2. Pour assurer une continuité de la ligne horizontale, il faut donc utiliser une valeur de padding sur 2(voir figure 6). Les valeurs de fin de compteurs pour chaque dimension sont : de 3 pour la dimension X (valeur 312), 3 pour la dimension Y (valeur 420) et 2 pour la dimension Z (valeur 421). Les valeurs d'incréments de compteur sont : 1 pour la dimension X (valeur 313), 4 pour la dimension Y (valeur 422) et 2 pour la dimension Z (valeur 423). Ces valeurs correspondent à un filtre de convolution de dimension 3x3 et à des données en trois dimensions avec 2 canaux sur la troisième dimension.

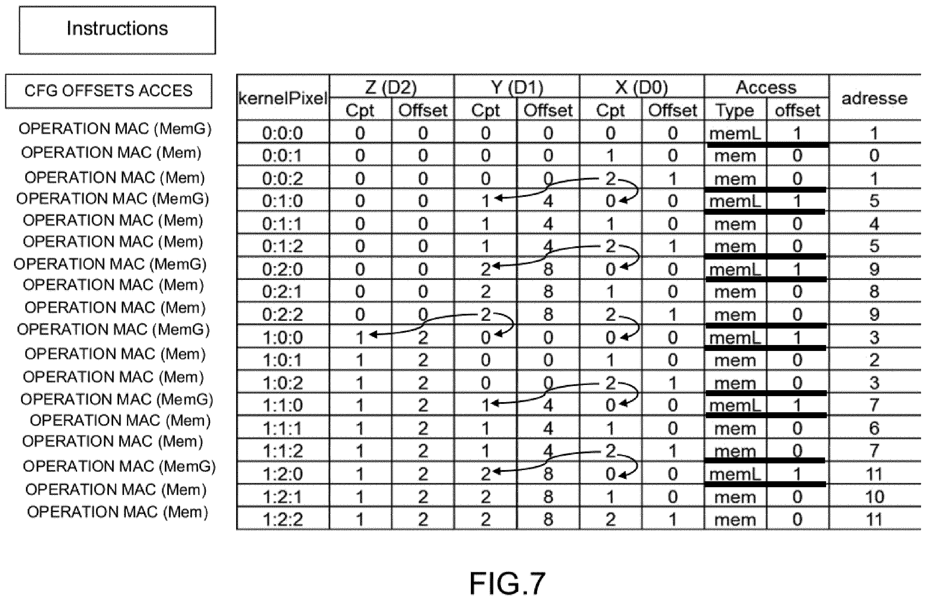

La figure 7 représente à l'aide d'un tableau le fonctionnement du générateur d'adresses 400 pour déterminer les adresses d'accès mémoire pour chaque instruction d'un calcul de convolution. L'exemple donné à la figure 7 correspond à un calcul de convolution sur les 9 premiers pixels situés sur les trois premières lignes et les trois premières colonnes d'une matrice et pour deux canaux.

L'exemple est transposable pour calculer n'importe quel noyau de convolution 3x3 pour n'importe quel processeur élémentaire.

La routine d'accès présentée à la figure 7 correspond aux accès mémoire représentés à la figure 6.

La première colonne du tableau donne la suite d'instructions pour réaliser le calcul. La colonne « kernelpixel » donne les coordonnées du coefficient du filtre de convolution.

Les colonnes Z(D2), Y(D1) et X(D0) donnent respectivement les valeurs des compteurs 425,424,319 et les valeurs des offsets 429,427,317 pour chacune des dimensions d'adressage D2,D1,D0.

Pour expliquer le déroulement de la routine d'accès, il faut se placer du point de vue du processeur élémentaire PE0 mais cette routine s'applique à l'identique pour chacun des autres processeurs élémentaires et en parallèle.

Le processeur élémentaire PE0 a un accès direct (central) à la première colonne de la mémoire locale (voir figure 6), un accès droit à la deuxième colonne (celle du processeur PE1) et un accès gauche à une colonne virtuelle de bourrage ou « padding ».

La première instruction est une opération MAC(MemG) sur la mémoire gauche. Les valeurs des compteurs 425 et offset 429 selon la dimension d'adressage D2 correspondant à la dimension des canaux sont égales à 0. Les valeurs des compteurs 424 et offset 428 selon la dimension d'adressage D1 correspondant aux lignes d'une matrice sont aussi égales à 0. Les valeurs des compteurs 319 et offset 317 selon la dimension d'adressage D0 correspondant aux colonnes d'une matrice sont aussi égales à 0. Le type d'accès est un accès en mémoire gauche memG donc l'offset d'accès en mémoire gauche est égale à 1. La somme des quatre valeurs d'offset est égale à 1 ce qui donne la valeur d'adresse 1 dans la mémoire gauche correspondant à la colonne de « padding » (voir figure 6).

L'instruction suivante est une opération MAC(Mem) sur la mémoire directe (centrale). Le compteur d'accès selon la première dimension D0 est incrémenté de 1. Comme il y a un changement de type d'accès mémoire (passage d'un accès mémoire gauche à un accès mémoire centrale), le registre d'offset 317 est réinitialisé à 0. L'offset d'accès à la mémoire centrale vaut 0 donc l'adresse finale est égale à 0 dans la mémoire centrale. Le processeur PE0 va lire le pixel de coordonnées 0.0.0 (voir figure 6).

L'instruction suivante est encore une opération MAC(Mem) sur la mémoire directe (centrale). Le compteur d'accès selon la première dimension D0 est incrémenté de 1 pour atteindre la valeur 2. Cette fois, il n'y a pas de changement de type d'accès (deux accès à la mémoire centrale consécutifs) donc la valeur de l'offset dans le registre 317 est incrémentée de 1. L'offset d'accès à la mémoire centrale vaut 0 donc l'adresse finale est égale à 1 dans la mémoire centrale. Le processeur PE0 va lire le pixel de coordonnées 0.0.1 (voir figure 6).

L'instruction suivante est une opération MAC(MemG) sur la mémoire gauche. Le compteur 319 atteint sa valeur maximale (égale à 3), il est donc réinitialisé à 0 et il active l'incrémentation du compteur 424 selon la deuxième dimension d'adressage D1. L'offset 427 selon la dimension D1 est incrémenté de la valeur d'incrément qui est égale à 4. L'offset d'accès à la mémoire gauche vaut 1 donc l'adresse finale est égale à 4+1=5 dans la mémoire gauche. Le processeur PE0 va lire le pixel à l'adresse 5 dans la mémoire de « padding » (voir figure 6).

L'instruction suivante est une opération MAC(Mem) sur la mémoire centrale. Le compteur d'accès selon la première dimension D0 est incrémenté de 1. Comme il y a un changement de type d'accès mémoire (passage d'un accès mémoire gauche à un accès mémoire centrale), le registre d'offset 317 est réinitialisé à 0. L'offset d'accès à la mémoire centrale vaut 0 donc l'adresse finale est égale à 4 dans la mémoire centrale. Le processeur PE0 va lire le pixel de coordonnées 0.1.0 (voir figure 6).

L'instruction suivante est encore une opération MAC(Mem) sur la mémoire directe (centrale). Le compteur d'accès selon la première dimension D0 est incrémenté de 1 pour atteindre la valeur 2. Cette fois, il n'y a pas de changement de type d'accès (deux accès à la mémoire centrale consécutifs) donc la valeur de l'offset dans le registre 317 est incrémentée de 1. L'offset d'accès à la mémoire centrale vaut 0 donc l'adresse finale est égale à 4+1=5 dans la mémoire centrale. Le processeur PE0 va lire le pixel de coordonnées 0.1.1 (voir figure 6).

La routine d'accès se poursuit ainsi pour calculer le premier noyau de convolution sur le premier canal. Les adresses suivantes générées par le générateur d'adresses sont (9 mémoire gauche), (8 mémoire centrale),(9 mémoire centrale).

Ensuite, le compteur d'accès selon la deuxième dimension D1 atteint sa valeur maximale (égale à 3) et est réinitialisé à 0. Il déclenche aussi l'incrémentation du compteur selon la troisième dimension D2 d'un incrément de 1 afin de débuter le calcul du noyau de convolution sur le second canal.

Les neuf adresses générées pour calculer ce second noyau de convolution sont : (3 mémoire gauche), (2 mémoire centrale), (3 mémoire centrale), (7 mémoire gauche), (6 mémoire centrale), (7 mémoire centrale), (11 mémoire gauche), (10 mémoire centrale), (11 mémoire centrale).

Ainsi, le générateur d'adresses 400 permet à chaque processeur élémentaire d'accéder à la bonne donnée en mémoire en un cycle pour chaque instruction de calcul.

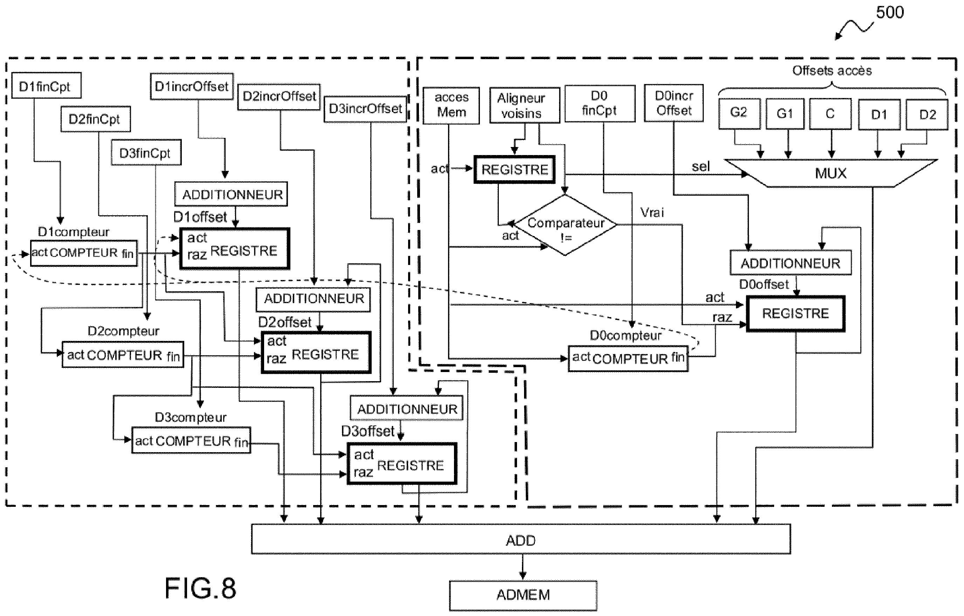

La figure 8 schématise un autre exemple de réalisation d'un générateur d'adresses 500 selon l'invention applicable à des données multidimensionnelles à quatre dimensions et à des processeurs élémentaires ayant cinq type d'accès distincts, un accès central, deux accès aux deux mémoires gauche et deux accès aux deux mémoires droites.

Le fonctionnement du générateur d'adresses 500 est identique à celui du générateur d'adresses 400 à la différence que l'adresse finale est égale à la somme de cinq offsets (un offset de plus correspondant à la dimension d'adressage supplémentaire).

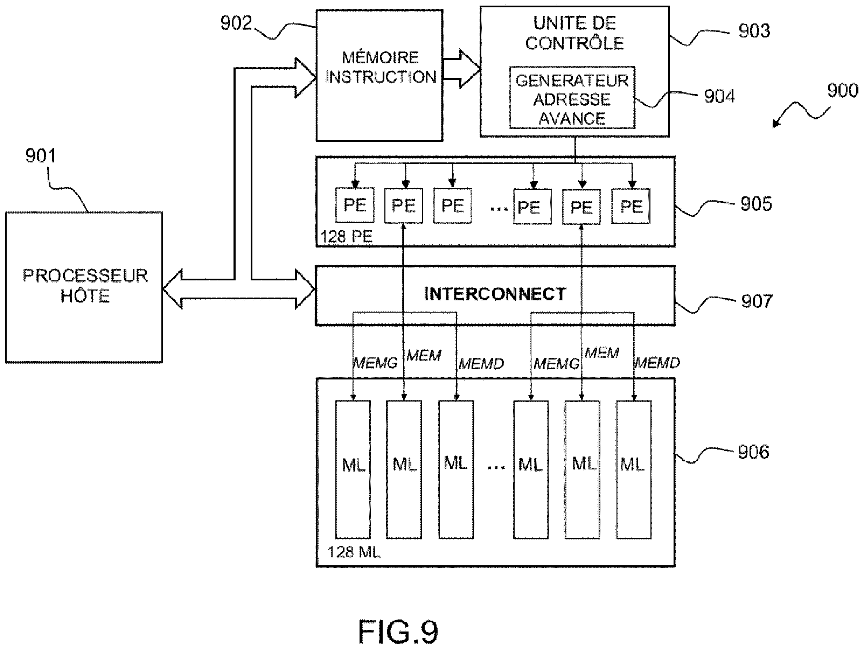

La figure 9 représente un schéma d'un dispositif de calcul SIMD comprenant un générateur d'adresses selon l'invention. Le dispositif de calcul 900 comporte un processeur hôte 901, une mémoire d'instructions 902, une unité de contrôle 903 comprenant un générateur d'adresses 904 selon l'invention, un ensemble de processeurs élémentaires 905, un ensemble de mémoires locales 906 et des moyens d'interconnexion 907 pour permettre l'accès aux mémoires locales par les processeurs élémentaires.

Le processeur hôte 901 pilote la mémoire d'instructions 902 qui elle-même génère des signaux à destination de l'unité de contrôle 903. Le générateur d'adresses 904 fournit, à chaque nouvelle instruction, une adresse d'accès mémoire et un type d'accès communs à l'ensemble des processeurs élémentaires pour qu'ils accèdent à la bonne donnée stockée dans l'une des mémoires locales.

## Revendications

1. Générateur d'adresse (300,400,500) pour un calculateur à architecture de type « instruction unique, données multiples » comprenant plusieurs processeurs élémentaires (PE0,PE1,PE2,PE3) étant chacun associé à une mémoire locale, chaque processeur élémentaire ayant un accès à sa mémoire locale et au moins un accès à une mémoire locale voisine d'un autre processeur élémentaire, le générateur d'adresse étant configuré pour, en réponse à une instruction de calcul, déterminer une adresse d'accès mémoire identique (ADMEM) pour tous les processeurs élémentaires, le générateur d'adresse comprenant :
- Une première unité de calcul (301,401) d'une première valeur de décalage d'accès selon une première dimension d'adressage (D0), et
- Un additionneur (ADD) pour calculer l'adresse d'accès mémoire (ADMEM) comme la somme de la première valeur de décalage d'accès et d'une valeur de décalage initiale prédéterminée (314) dépendant d'un type d'accès mémoire (311) indiqué par l'instruction de calcul parmi un accès mémoire à la mémoire locale ou un accès mémoire à l'une quelconque des mémoires locales voisines.

2. Générateur d'adresse selon la revendication 1 dans lequel la première unité de calcul (301,401) est configurée pour, en réponse à une demande d'accès mémoire (310) par l'instruction de calcul,
- incrémenter la première valeur de décalage d'accès d'une première valeur d'incrément (313),
- comparer le type d'accès mémoire demandé par rapport au type d'accès mémoire précédent, et
- réinitialiser la première valeur de décalage d'accès lorsque le nombre d'accès mémoire atteint une première valeur maximale (312) ou lorsque le type d'accès mémoire demandé est différent du type d'accès mémoire précédent.

3. Générateur d'adresse selon la revendication 2 dans lequel la première unité de calcul (301,401) comprend un comparateur (315,316) pour comparer le type d'accès mémoire demandé par rapport au type d'accès mémoire précédent, un registre (317) et un additionneur (318) pour incrémenter et sauvegarder la première valeur de décalage d'accès et un compteur (319) pour compter le nombre d'accès mémoire.

4. Générateur d'adresse selon la revendication 3 dans lequel le compteur (319) est configuré pour réinitialiser le registre (317) lorsque le nombre d'accès mémoire atteint la première valeur maximale (312).

5. Générateur d'adresse selon l'une des revendications 3 ou 4 dans lequel le comparateur (315,316) est configuré pour réinitialiser le registre (317) lorsque le type d'accès mémoire demandé (311) est différent du type d'accès mémoire précédent.

6. Générateur d'adresse selon l'une quelconque des revendications précédentes dans lequel l'accès aux mémoires est multidimensionnel et le générateur d'adresses (300,400,500) comprend en outre au moins une unité de calcul supplémentaire (302,402) pour calculer une valeur de décalage d'accès supplémentaire selon une dimension d'adressage supplémentaire (D1,D2), l'additionneur (ADD) étant configuré pour calculer l'adresse d'accès mémoire comme la somme de toutes les valeurs de décalage d'accès selon chaque dimension d'adressage et de ladite valeur de décalage initiale.

7. Générateur d'adresse selon la revendication 6 dans lequel chaque unité de calcul supplémentaire (302,402) est configurée pour :
- Incrémenter un compteur (322,424,425) du nombre d'accès mémoire selon la dimension d'adressage supplémentaire (D1,D2),
- Incrémenter la valeur de décalage d'accès supplémentaire d'une deuxième valeur d'incrément (321,422,423) à chaque nouvel accès mémoire selon la dimension d'adressage supplémentaire (D1,D2), et
- Réinitialiser la valeur de décalage d'accès supplémentaire lorsque le nombre d'accès mémoire selon la dimension d'adressage supplémentaire atteint une seconde valeur maximale (320,420,421).

8. Générateur d'adresse selon la revendication 7 dans lequel chaque unité de calcul supplémentaire (302,402) comprend un registre (324,427,429) et un additionneur (323,426,428) pour incrémenter et sauvegarder la valeur de décalage d'accès supplémentaire et un compteur (322,424,425) pour compter le nombre d'accès mémoire selon la dimension d'adressage supplémentaire.

9. Générateur d'adresse selon la revendication 8 dans lequel le compteur (322,424,425) est configuré pour réinitialiser le registre (324,427,429) lorsque le nombre d'accès mémoire selon la dimension d'adressage supplémentaire atteint la seconde valeur maximale (320,420,421).

10. Calculateur (900) à architecture de type « instruction unique, données multiples » comprenant :
- Un processeur hôte (901),
- Une mémoire d'instructions (902),
- Une unité de contrôle (903) comprenant un générateur d'adresse (904) selon l'une quelconque des revendications précédentes, et
- Plusieurs processeurs élémentaires (905) étant chacun associé à une mémoire locale (906), chaque processeur élémentaire ayant un accès à sa mémoire locale et au moins un accès à une mémoire locale voisine d'un autre processeur élémentaire.

11. Calculateur (900) selon la revendication 10 configuré pour réaliser des calculs de convolution entre un filtre de convolution et des données multidimensionnelles stockées dans les mémoires locales avec un niveau d'entrelacement prédéfini, la première dimension d'adressage correspondant à une première dimension du filtre de convolution, la deuxième dimension d'adressage correspondant à une seconde dimension du filtre de convolution et les dimensions d'adressage supplémentaires correspondant aux dimensions supplémentaires des données multidimensionnelles.

12. Calculateur (900) selon la revendication 11 dans lequel les valeurs d'incrément (313,314,321,422,423) sont définies par le plan d'occupation des données en mémoire, la première valeur maximale (312) est égale à la taille du filtre de convolution selon sa première dimension, la valeur maximale selon la deuxième dimension d'adressage (420) est égale à la taille du filtre de convolution selon sa seconde dimension et les valeurs maximales selon les dimensions d'adressage supplémentaires (421) sont respectivement égales aux tailles maximales des données selon les dimensions supplémentaires des données.

## Patentansprüche

1. Adressgenerator (300, 400, 500) für einen Rechner mit einer SIMD-(Single Instruction Multiple Data)-Architektur, der mehrere Elementarprozessoren (PE0, PE1, PE2, PE3) umfasst, die jeweils mit einem lokalen Speicher assoziiert sind, wobei jeder Elementarprozessor einen Zugang zu seinem lokalen Speicher und mindestens einen Zugang zu einem lokalen Nachspeicher eines anderen Elementarprozessors hat, wobei der Adressgenerator zum Bestimmen, als Reaktion auf einen Rechenbefehl, einer identischen Speicherzugriffsadresse (ADMEM) für alle Elementarprozessoren konfiguriert ist, wobei der Adressgenerator Folgendes umfasst:
- eine erste Einheit (301, 401) zum Berechnen eines ersten Zugriffsversatzwerts gemäß einer ersten Adressierungsdimension (D0), und
- einen Addierer (ADD) zum Berechnen der Speicherzugriffsadresse (ADMEM) als die Summe des ersten Zugriffsversatzwerts und eines vorbestimmten Anfangsversatzwerts (314), der von einem Speicherzugriffstyp (311) abhängt, der durch den Berechnungsbefehl angegeben wird, aus einem Speicherzugriff auf den lokalen Speicher oder einem Speicherzugriff auf einen der lokalen Nachbarspeicher.

2. Adressgenerator nach Anspruch 1, wobei die erste Recheneinheit (301, 401) als Reaktion auf eine durch den Rechenbefehl erfolgte Speicherzugriffsanforderung (310) konfiguriert ist zum:
- Inkrementieren des ersten Zugriffsversatzwerts um einen ersten Inkrementwert (313),
- Vergleichen des angeforderten Speicherzugriffstyps mit dem vorherigen Speicherzugriffstyp und
- Zurücksetzen des ersten Zugriffsversatzwerts, wenn die Anzahl der Speicherzugriffe einen ersten Maximalwert (312) erreicht oder wenn sich der angeforderte Speicherzugriffstyp vom vorherigen Speicherzugriffstyp unterscheidet.

3. Adressgenerator nach Anspruch 2, wobei die erste Recheneinheit (301, 401) einen Komparator (315, 316) zum Vergleichen des angeforderten Speicherzugriffstyps mit dem vorherigen Speicherzugriffstyp, ein Register (317) und einen Addierer (318) zum Inkrementieren und Speichern des ersten Zugriffsversatzwerts und einen Zähler (319) zum Zählen der Anzahl von Speicherzugriffen umfasst.

4. Adressgenerator nach Anspruch 3, wobei der Zähler (319) zum Zurücksetzen des Registers (317) konfiguriert ist, wenn die Anzahl von Speicherzugriffen den ersten Maximalwert (312) erreicht.

5. Adressgenerator nach Anspruch 3 oder 4, wobei der Komparator (315, 316) zum Zurücksetzen des Registers (317) konfiguriert ist, wenn sich der angeforderte Speicherzugriffstyp (311) vom vorherigen Speicherzugriffstyp unterscheidet.

6. Adressgenerator nach einem der vorhergehenden Ansprüche, wobei der Zugang zu den Speichern mehrdimensional ist und der Adressgenerator (300, 400, 500) ferner mindestens eine zusätzliche Recheneinheit (302, 402) zum Berechnen eines zusätzlichen Zugriffsversatzwertes gemäß einer zusätzlichen Adressierungsdimension (D1, D2) umfasst, wobei der Addierer (ADD) zum Berechnen der Speicherzugriffsadresse als die Summe aller Zugriffsversatzwerte gemäß jeder Adressierungsdimension und des ursprünglichen Versatzwertes konfiguriert ist.

7. Adressgenerator nach Anspruch 6, wobei jede zusätzliche Recheneinheit (302, 402) konfiguriert ist zum:
- Inkrementieren eines Zählers (322, 424, 425) zum Zählen der Anzahl der Speicherzugriffe gemäß der zusätzlichen Adressierungsdimension (D1, D2),
- Inkrementieren des zusätzlichen Zugriffsversatzwertes um einen zweiten Inkrementwert (321, 422, 423) bei jedem neuen Speicherzugriff gemäß der zusätzlichen Adressierungsdimension (D1, D2), und
- Zurücksetzen des zusätzlichen Zugriffsversatzwerts, wenn die Anzahl der Speicherzugriffe gemäß der zusätzlichen Adressierungsdimension einen zweiten Maximalwert (320, 420, 421) erreicht.

8. Adressgenerator nach Anspruch 7, wobei jede zusätzliche Recheneinheit (302, 402) ein Register (324, 427, 429) und einen Addierer (323, 426, 428) zum Inkrementieren und Speichern des zusätzlichen Zugriffsversatzwerts und einen Zähler (322, 424, 425) zum Zählen der Anzahl von Speicherzugriffen gemäß der zusätzlichen Adressierungsdimension umfasst.

9. Adressgenerator nach Anspruch 8, wobei der Zähler (322, 424, 425) zum Zurücksetzen des Registers (324, 427, 429) konfiguriert ist, wenn die Anzahl der Speicherzugriffe gemäß der zusätzlichen Adressierungsdimension den zweiten Maximalwert (320, 420, 421) erreicht.

10. Rechner (900) mit einer SIMD-(Single Instruction Multiple Data)-Architektur, der Folgendes umfasst:
- einen Host-Prozessor (901),
- einen Befehlsspeicher (902),
- eine Steuereinheit (903), die einen Adressgenerator (904) nach einem der vorhergehenden Ansprüche umfasst, und
- mehrere Elementarprozessoren (905), die jeweils mit einem lokalen Speicher (906) assoziiert sind, wobei jeder Elementarprozessor einen Zugang zu seinem lokalen Speicher und mindestens einen Zugang zu einem lokalen Nachbarspeicher eines anderen Elementarprozessors hat.

11. Rechner (900) nach Anspruch 10, konfiguriert zum Durchführen von Faltungsberechnungen zwischen einem Faltungsfilter und in den lokalen Speichern gespeicherten mehrdimensionalen Daten mit einem vordefinierten Verschachtelungsgrad, wobei die erste Adressierungsdimension einer ersten Dimension des Faltungsfilters entspricht, die zweite Adressierungsdimension einer zweiten Dimension des Faltungsfilters entspricht und die zusätzlichen Adressierungsdimensionen den zusätzlichen Dimensionen der mehrdimensionalen Daten entsprechen.

12. Rechner (900) nach Anspruch 11, wobei die Inkrementwerte (313, 314, 321, 422, 423) durch den Datenbelegungsplan im Speicher definiert sind, der erste Maximalwert (312) gleich der Größe des Faltungsfilters gemäß seiner ersten Dimension ist, der Maximalwert gemäß der zweiten Adressierungsdimension (420) gleich der Größe des Faltungsfilters gemäß seiner zweiten Dimension ist und die Maximalwerte gemäß den zusätzlichen Adressierungsdimensionen (421) jeweils gleich den maximalen Größen der Daten gemäß den zusätzlichen Dimensionen der Daten sind.

## Claims

1. An address generator (300, 400, 500) for a computer with a single instruction multiple data architecture comprising several elementary processors (PE0, PE1, PE2, PE3), each associated with a local memory, each elementary processor having access to its local memory and at least one access to a neighbouring local memory of another elementary processor, the address generator being configured, in response to a computing instruction, to determine an identical memory access address (ADMEM) for all elementary processors, the address generator comprising:
- a first computing unit (301, 401) for computing a first access offset value in a first addressing dimension (D0), and
- an adder (ADD) for computing the memory access address (ADMEM) as the sum of the first access offset value and of a predetermined initial offset value (314) dependent on a memory access type (311) indicated by the computing instruction from among a memory access to the local memory or a memory access to any one of the neighbouring local memories.

2. The address generator according to claim 1, wherein the first computing unit (301, 401) is configured, in response to a memory access request (310) made by the computing instruction, to:
- increment the first access offset value by a first increment value (313),
- compare the requested memory access type with the previous memory access type, and
- reset the first access offset value when the number of memory access reaches a first maximum value (312) or when the requested memory access type is different from the previous memory access type.

3. The address generator according to claim 2, wherein the first computing unit (301, 401) comprises a comparator (315, 316) for comparing the requested memory access type with the previous memory access type, a register (317) and an adder (318) for incrementing and saving the first access offset value and a counter (319) for counting the number of memory access.

4. The address generator according to claim 3, wherein the counter (319) is configured to reset the register (317) when the number of memory access reaches the first maximum value (312).

5. The address generator according to any one of claims 3 or 4, wherein the comparator (315, 316) is configured to reset the register (317) when the requested memory access type (311) is different from the previous memory access type.

6. The address generator according to any one of the preceding claims, wherein access to the memories is multidimensional and the address generator (300, 400, 500) further comprises at least one additional computing unit (302, 402) for computing an additional access offset value in an additional addressing dimension (D1, D2), the adder (ADD) being configured to compute the memory access address as the sum of all of the access offset values in each addressing dimension and of said initial offset value.

7. The address generator according to claim 6, wherein each additional computing unit (302, 402) is configured to:
- increment a counter (322, 424, 425) for counting the number of memory access in the additional addressing dimension (D1, D2),
- increment the additional access offset value by a second increment value (321, 422, 423) upon each new memory access in the additional addressing dimension (D1, D2), and
- reset the additional access offset value when the number of memory access in the additional addressing dimension reaches a second maximum value (320, 420, 421).

8. The address generator according to claim 7, wherein each additional computing unit (302, 402) comprises a register (324, 427, 429) and an adder (323, 426, 428) for incrementing and saving the additional access offset value and a counter (322, 424, 425) for counting the number of memory access in the additional addressing dimension.

9. The address generator according to claim 8, wherein the counter (322, 424, 425) is configured to reset the register (324, 427, 429) when the number of memory access in the additional addressing dimension reaches the second maximum value (320, 420, 421).

10. A computer (900) with a single instruction multiple data architecture comprising:
- a host processor (901),
- an instruction memory (902),
- a control unit (903) comprising an address generator (904) according to any one of the preceding claims, and
- several elementary processors (905), each associated with a local memory (906), every elementary processor having access to its local memory and at least one access to a neighbouring local memory of another elementary processor.

11. The computer (900) according to claim 10, configured to carry out convolution computations between a convolution filter and multidimensional data stored in the local memories with a predefined interleaving level, the first addressing dimension corresponding to a first dimension of the convolution filter, the second addressing dimension corresponding to a second dimension of the convolution filter and the additional addressing dimensions corresponding to the additional dimensions of the multidimensional data.

12. The computer (900) according to claim 11, wherein the increment values (313, 314, 321, 422, 423) are defined by the occupation plan for the data in memory, the first maximum value (312) is equal to the size of the convolution filter in its first dimension, the maximum value in the second addressing dimension (420) is equal to the size of the convolution filter in its second dimension and the maximum values in the additional addressing dimensions (421) are respectively equal to the maximum sizes of the data in the additional dimensions of the data.
